Europäisches Patentamt

European Patent Office

Office européen des brevets

(11) Veröffentlichungsnummer : **0 331 947 B1**

(12) **EUROPÄISCHE PATENTSCHRIFT**

(45) Veröffentlichungstag der Patentschrift :
01.07.92 Patentblatt 92/27

(51) Int. Cl.$^5$ : **B23K 9/28**

(21) Anmeldenummer : **89102815.1**

(22) Anmeldetag : **18.02.89**

(54) **Spannhülse für Elektroden in Brennern, insbesondere WIG-Brennern.**

(30) Priorität : **05.03.88 DE 8803019 U**

(43) Veröffentlichungstag der Anmeldung :
**13.09.89 Patentblatt 89/37**

(45) Bekanntmachung des Hinweises auf die
Patenterteilung :
**01.07.92 Patentblatt 92/27**

(84) Benannte Vertragsstaaten :
**CH DE FR GB LI NL**

(56) Entgegenhaltungen :
**US-A- 4 461 948**

(73) Patentinhaber : **Werner, Jankus**
**Unterer Weg 6**
**W-4600 Dortmund 30 (DE)**

(72) Erfinder : **Werner, Jankus**
**Unterer Weg 6**
**W-4600 Dortmund 30 (DE)**

(74) Vertreter : **Niemann, Uwe, Dr.-Ing.**
**Ahornstrasse 41**
**W-4300 Essen 1 (DE)**

## Beschreibung

Die Erfindung betrifft eine Spannhülse für Elektroden in Brennern, insbesondere WIG-Brennern, mit einer durchgehenden Bohrung für die Elektrode, einem Widerlager für eine am Spannhülsengehäuse befestigbare Spannkappe und einem mit einer konischen oder kalottenförmigen Widerlagerfläche des Spannhülsengehäuses zusammenwirkenden Spannende, wobei die Elektrode zentrisch zwischen der Spannhülse und dem Spannhülsengehäuse verspannt wird.

Aus der Praxis bekannte Spannhülsen für WIG-Brenner sind an ihrem Spannende in axialer Richtung geschlitzt. Die da'durch am Spannende gebildeten Zungen umfassen die Elektrode, meistens eine Wolfram-Elektrode. Beim Aufdrehen der Spannkappe auf das Spannhülsengehäuse wird das Spannende der Spannhülse gegen die konische oder kalottenförmige Widerlagerfläche des Spannhülsengehäuses gedrückt. Dabei wird die Elektrode zwischen den Zungen eingespannt und gehalten. Durch Lösen der Spannkappe kann die Einspannung der Elektrode aufgehoben und die Elektrode zur Anpassung an unterschiedliche Arbeitsbedingungen axial verschoben werden oder gegen eine andere Elektrode ausgetauscht werden.

Der Schweißstrom wird über das Spannhülsengehäuse und die Spannhülse auf die Elektrode übertragen. Damit der Schweißstrom möglichst dicht an der Schweißstelle in die Elektrode eingeleitet wird, ist die Durchgangsbohrung der Spannhülse als Stufenbohrung ausgeführt, so daß die Elektrode nur im Bereich der gegen sie verspannten Zungenenden metallischen Kontakt mit der Spannhülse hat. Dementsprechend ist die Strombelastung im Bereich der Widerlagerfläche des Spannhülsengehäuses und der Zungenenden besonders hoch. Andererseits ist in diesem Bereich aber auch die Wärmebelastung besonders groß, denn sowohl Wolfram, das Material der Elektrode, als auch Kupfer oder eine Kupfer-Tellur-Legierung, das Material der Spannhülse und/oder des Spannhülsengehäuses, sind sehr gute Wärmeleiter. Trotz der guten Wärmeleitfähigkeit dieser Materialien werden insbesondere an den Zungen des Spannendes die zulässigen Temperaturen überschritten. Es kann dann zu unerwünschten Verformungen, Verwindungen oder gar Verbrennungen der Zungenenden kommen, so daß die Spannhülse unbrauchbar wird. Eine Verbesserung der Wärmeableitung ist wegen der kleinen Abmessungen der Teile kaum möglich. Aus dem gleichen Grunde kann auch das Kühlsystem des Brennerkopfes, in dem das Spannhülsengehäuse gehalten ist, nicht bis zum unteren Ende des Spannhülsengehäuses und damit der Spannhülse ausgedehnt werden

Bei einer Spannhülse der eingangs beschriebenen Gattung (US-A-44 61 968) ist die Bohrung in der Spannhülse zentrisch angeordnet. Um eine exzentrische Verspannung der Elektrode zwischen der Spannhülse und dem Spannhülsengehäuse zu erreichen, ist die konische Widerlagerfläche der Spannhülse exzentrisch angeordnet. Das hat zur Folge, daß die Spannhülse bzw. ihr Spannende beim Spannvorgang nicht nur axial belastet, sondern auch seitlich ausgelenkt und damit verbogen wird. Bei den hohen thermischen Beanspruchungen während des Betriebes ist die Widerstandsfähigkeit auch der Spannhülse reduziert, so daß bleibende Verformungen nicht ausgeschlossen werden können. Eine verformte Spannhülse ist aber unbrauchbar, weil eine darin eingesetzte Elektrode dann nicht mehr in axialer Richtung verschoben werden oder durch eine andere Elektrode ersetzt werden kann.

Aufgabe der Erfindung ist es, eine Spannhülse der eingangs beschriebenen Gattung so zu verbessern, daß unerwünschte Verformungen der Spannhülse vermieden werden sowie die Strom- und/oder Wärmebelastung im Bereich des Spannendes gering ist.

Diese Aufgabe wird dadurch gelöst, daß die Bohrung für die Elektrode in der Spannhülse exzentrisch angeordnet ist. Beim Einspannen dieser Spannhülse in das Spannhülsengehäuse wird nach wie vor die konische oder kalottenförmige Widerlagerfläche des Spannhülsengehäuses genutzt, die mit dem Spannende zusammenwirkt. Die Elektrode wird aber nicht mehr allein am Spannende der Spannhülse eingespannt, sondern zusätzlich zwischen dem Spannende und der am Ende des Spannhülsengehäuses vorhandenen Durchgangsbohrung für die Elektrode. Die Einspannung wirkt derart, daß beim Aufdrehen der Spannkappe auf das Spannhülsengehäuse das Spannende von der konischen oder kalottenförmigen Widerlagerfläche geführt wird. Wegen der exzentrischen Anordnung der Bohrung für die Elektrode wird jedoch die Elektrode gegen die einander gegenüberliegenden Seiten einerseits der Durchgangsbohrung und andererseits der Bohrung in der Spannhülse selbst gespannt. Da sowohl die Bohrung der Spannhülse als auch die Durchgangsbohrung des Spannhülsengehäuses einen Durchmesser aufweisen, der mit geringem Spiel dem Durchmesser der Elektrode entspricht, entsteht ein großflächiger metallischer Kontakt zwischen Spannhülsengehäuse und Elektrode, über den sowohl der Schweißstrom zur Elektrode als auch die Wärme der Elektrode in das Spannhülsengehäuse fließt. Die Belastung des Spannendes durch Strom und Wärme wird dadurch erheblich reduziert. Die Spannhülse ist ausschließlich axial belastet, weil beim Verspannen ihre konische oder kalottenförmige Widerlagerfläche zentrisch zur entsprechenden Widerlagerfläche des Spannhülsengehäuses bewegt wird. Seitliche Auslenkungen und daraus resultierende Verbiegungen sind ausgeschlossen.

Die Bohrung kann auch eine Stufenbohrung sein. Dabei kann es genügen, wenn lediglich der am Spannende mündende Abschnitt der Stufenbohrung exzentrisch angeordnet ist. Es können aber auch beide Abschnitte der Stufenbohrung exzentrisch angeordnet sein.

Vorzugsweise sollte das Spannende eine der konischen oder kalottenförmigen Widerlagerfläche entsprechende Außenkontur besitzen.

Im folgenden wird ein in der Zeichnung dargestelltes Ausführungsbeispiel der Erfindung erläutert; es zeigen:

Fig. 1 einen Längsschnitt durch ein Spannhülsengehäuse mit Spannhülse für einen WIG-Brenner,

Fig. 2 einen Schnitt in Richtung II - II durch den Gegenstand nach Figur 1.

Das dargestellte Spannhülsengehäuse 1 gehört zu einem nicht dargestellten WIG-Brenner. In einem Bohrungsabschnitt 2 des Spannhülsengehäuses 1 ist eine Spannhülse 3 eingesetzt. Die Spannhülse 3 weist eine durchgehende Stufenbohrung 4 auf, in die eine Elektrode 5 eingeführt ist. Die Elektrode 5 erstreckt sich über die Spannhülse 3 hinaus durch eine Durchgangsbohrung 6 am Ende des Spannhülsengehäuses 1. Das Spannhülsengehäuse 1 und die Spannhülse 3 bestehen aus einer Kupfer-Tellur-Legierung. Die Elektrode 5 ist eine Wolfram-Elektrode. Der Bohrungsabschnitt 2 des Spannhülsengehäuses 1 besitzt einen Innendurchmesser, der größer ist als der Außendurchmesser der Spannhülse 3, so daß ein Ringkanal 7 für die Zuführung eines Schutzgases zur Schweißstelle gebildet ist. Das Schutzgas tritt aus dem Ringkanal 7 über radiale Bohrungen 8 des Spannhülsengehäuses 1 aus und strömt von dort weiter zur Schweißstelle, wobei es von einer nicht dargestellten Düse geführt wird, die auf ein Außengewinde 9 des Spannhülsengehäuses 1 aufgedreht wird.

Der untere Abschnitt 10 der Stufenbohrung 4 besitzt einen Innendurchmesser, der mit geringem Spiel dem Außendurchmesser der Elektrode 5 entspricht. Ähnliches gilt auch für die Durchgangsbohrung 6 am unteren Ende des Spannhülsengehäuses 1. Der Übergang zwischen der Durchgangsbohrung 6 des Spannhülsengehäuses 1 und dem daran anschließenden Bohrungsabschnitt 2 wird von einer Widerlagerfläche 11 gebildet, die bei der dargestellten Ausführung eine kugelkalottenförmige Kontur besitzt. Die Widerlagerfläche 11 kann aber auch konisch ausgebildet sein. Diese Widerlagerfläche 11 wirkt mit einem ungeschlitzten Spannende 12 der Spannhülse 3 zusammen. Das Spannende 12 besitzt eine der Widerlagerfläche 11 angepaßte Außenkontur.

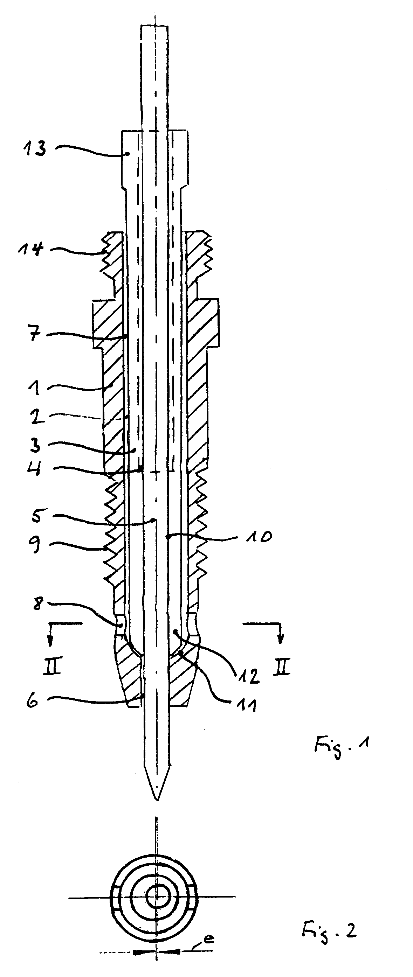

Wie man insbesondere aus Figur 2 entnimmt, ist die Stufenbohrung 4 mit ihren beiden Abschnitten, insbesondere aber mit dem engeren Abschnitt 10, exzentrisch in der Spannhülse 3 angeordnet. Die Exzentrizität e kann je nach Ausführung in der Größenordnung von 0,1 bis 1 mm liegen.

Zum Verspannen einer Elektrode 5 im Spannhülsengehäuse 1 wird die Elektrode 5 in die bereits im Spannhülsengehäuse 1 befindliche Spannhülse 3 eingeführt. Die Spannhülse 3 wird dann mit einer nicht dargestellten Spannkappe, die auf ein oberes Widerlager 13 der Spannhülse 3 einwirkt und die auf ein Außengewinde 14 des Spannhülsengehäuses 1 aufgedreht wird, in das Spannhülsengehäuse 1 gedrückt. Dabei wird das Spannende 12 von der Widerlagerfläche 11 geführt. Die exzentrisch geführte Elektrode 5 wird gegen eine Seite der Durchgangsbohrung 6 am unteren Ende des Spannhülsengehäuses 1 gepreßt. Schon bei verhältnismäßig geringem Spanndruck der Spannkappe sitzt die Elektrode 5 fest. Nach dem Lösen der Spannkappe kann die Elektrode 5 in axialer Richtung verschoben werden oder durch eine andere Elektrode ersetzt werden.

## Patentansprüche

1. Spannhülse für Elektroden (5) in Brennern, insbesondere WIG-Brennern, mit einer durchgehenden Bohrung (4) für die Elektrode (5), einem Widerlager (13) für eine am Spannhülsengehäuse (1) befestigbare Spannkappe und ei nem mit einer konischen oder kalottenförmigen Widerla gerfläche (11) des Spannhülsengehäuses (1) zusammenwir kenden Spannende (12), wobei die Elektrode (5) exzen trisch zwischen der Spannhülse (3) und dem Spannhülsen gehäuse (1) verspannt wird, **dadurch gekenn zeichnet**, daß die Bohrung (4) für die Elektro de (5) in der Spannhülse (3) exzentrisch angeordnet ist.

2. Spannhülse nach Anspruch 1, **dadurch gekennzeichnet,** daß die Spannhülse (3) schlitzfrei ausgeführt ist.

3. Spannhülse nach Anspruch 1 oder 2, **dadurch gekennzeichnet,** daß die Bohrung eine Stufenbohrung (4) ist.

4. Spannhülse nach Anspruch 3, **dadurch gekennzeichnet,** daß lediglich der am Spannende (12) mündende Abschnitt (10) der Stufenbohrung (4) exzentrisch angeordnet ist.

5. Spannhülse nach Anspruch 3, **dadurch gekennzeichnet,** daß beide Abschnitte der Stufenbohrung (4) exzentrisch angeordnet sind.

## Claims

1. Collet for electrodes (5) in torches, in particular TIG torches, with a passage bore (4) for the electrode (5), a counterbearing (13) for a clamping cap fastenable at the collet housing (1) and a clamping end (12) cooperating with a conical or calotte-shaped counterbearing surface (11) of the collet housing (1), wherein the electrode (5) is clamped eccentrically between the collet (3) and the collet housing (1), characterised thereby, that the bore (4) for the electrode (5) is arranged eccentrically in the collet (3).

2. Collet according to claim 1, characterised thereby, that the collet (3) is made without slots.

3. Collet according to claim 1 or 2, characterised thereby, that the bore is a stepped bore (4).

4. Collet according to claim 3, characterised thereby, that merely that portion (10) of the stepped bore (4), which opens at the clamping end, is arranged eccentrically.

5. Collet according to claim 3, characterised thereby, that both portions of the stepped bore (4) are arranged eccentrically.

## Revendications

1. Manchon de serrage pour électrodes (5) dans des torches, notamment des torches TIG, présentant un perçage (4) traversant le manchon de part en part et destiné à recevoir l'électrode (5), un appui (13) pour un chapeau de serrage à fixer sur un porte-manchon(1) et une extrémité de serrage (12) coopérant avec une surface d'appui (11) conique ou en forme de calotte du porte-manchon (1), dans lequel l'électrode (5) est serrée de façon excentrée entre le manchon de serrage (3) et le porte-manchon (1), caractérisé en ce que le perçage (4) pour l'électrode (5) dans le manchon de serrage (3) est disposé excentré.

2. Manchon de serrage selon la revendication 1, caractérisé en ce qu'il (3) est dépourvu de fentes.

3. Manchon de serrage selon la revendication 1 ou 2, caractérisé en ce que le perçage est un perçage étagé (4).

4. Manchon de serrage selon la revendication 3, caractérisé en ce que seul le segment (10) débouchant à l'extrémité de serrage du perçage étagé (4) est disposé excentré.

5. Manchon de serrage selon la revendication 3, caractérisé en ce que les deux segments du perçage étagé (4) sont disposés excentrés.

13

14

7

1

2

3

4

5

9

8

6

II

II

10

12

11

Fig. 1

e

Fig. 2